# FASCICULE DE BREVET EUROPEEN

(11) **EP 2 146 869 B1**
(45) Date de publication et mention de la délivrance du brevet: **01.09.2010**
(21) Numéro de dépôt: 08805688.2
(22) Date de dépôt: 22.04.2008
(51) Int. Cl.: B60R 11/02, B60R 11/00, B62D 65/14, H04R 1/02

(54) **DISPOSITIF DE SUPPORT D'UN HAUT-PARLEUR DE VEHICULE AUTOMOBILE ET PROCEDE DE MONTAGE D'UN HAUT-PARLEUR SUR UN TEL DISPOSITIF**
HALTEVORRICHTUNG FÜR EINEN AUTOLAUtSPRECHER UND VERFAHREN ZUR MONTAGE EINES LAUTSPRECHERS AN EINE DERARTIGE VORRICHTUNG
DEVICE FOR HOLDING AN AUTOMOBILE LOUDSPEAKER AND METHOD FOR MOUNTING A LOUDSPEAKER ON SUCH DEVICE

(30) Priorité: 24.05.2007 FR 0755239
(43) Date de publication de la demande: 27.01.2010
(73) Titulaire: Peugeot Citroën Automobiles SA, 78140 Vélizy-Villacoublay (FR)
(72) Inventeur: NORAIS, Marc, F-78500 Sartrouville (FR)
(86) Numéro de dépôt international: PCT/FR2008/050733
(87) Numéro de publication internationale: WO 2008/145925

(56) Documents cités:
- EP-A- 0 712 758
- DE-B3-102004 029 865
- DE-B4- 10 196 314
- US-A1- 2004 037 445

## Description

La présente invention concerne un dispositif de support d'au moins un haut-parleur dans un élément de carrosserie d'un véhicule automobile.

L'invention concerne également un procédé de montage d'un haut-parleur sur un tel dispositif de support.

Les véhicules automobiles sont équipés de haut-parleurs montés sur des éléments de carrosserie et notamment sur les panneaux de portes.

Le montage des haut-parleurs sur les panneaux de porte pose des problèmes et notamment des problèmes d'étanchéité.

En effet, il peut se produire à l'intérieur du panneau de porte des ruissellements d'eau si bien qu'il faut protéger le haut-parleur ainsi que les organes de connexion de ces haut-parleurs de ces ruissellements d'eau.

Pour cela, des éléments d'étanchéité peuvent être disposés entre le panneau de porte et le haut-parleur et également au niveau des organes de connexion.

De plus, pour des raisons d'implantation par exemple du fait du coulissement de la vitre à l'intérieur du panneau de porte, il peut s'avérer nécessaire de déplacer les organes de connexion du haut-parleur en lui faisant subir une rotation de plusieurs degrés ce qui peut rendre les éléments d'étanchéité inefficace.

L'invention a pour but de proposer un dispositif de support d'un haut-parleur qui permet, par des moyens simples et peu onéreux, de résoudre ces problèmes. Le document DE 101 963 14 B4 décrit un état de la technique selon le préambule de la revendication 1.

L'invention a donc pour objet un dispositif de support d'un haut-parleur, notamment sur un élément de carrosserie d'un véhicule automobile, du type comprenant une pièce comportant une partie centrale formant cuvette et une partie périphérique formant un rebord d'appui du haut-parleur, caractérisé en ce que la pièce comporte :
- des moyens de montage du haut-parleur dans différentes positions angulaires par rapport à ladite pièce,
- une ouverture correspondante à chaque position angulaire pour le passage d'un organe de connexion, et
- des déflecteurs d'eau disposés sur la face externe de la pièce au-dessus de ladite ouverture.

Selon d'autres caractéristiques de l'invention :
- les positions angulaires du haut-parleur par rapport à la pièce sont au nombre de trois et la pièce comporte trois ouvertures,
- les moyens de montage comprennent sur le rebord d'appui de la pièce, des orifices de passage d'organe de vissage pour chacune des positions angulaires,
- ladite ouverture est ménagée sur la partie centrale de la pièce,
- les déflecteurs sont formés par des nervures,
- la pièce comporte des moyens d'étanchéité avec le haut-parleur, et
- les moyens d'étanchéité sont formés par un joint périphérique en matériau souple disposé sur le rebord d'appui, au bord de la partie centrale de la pièce.

L'invention a également pour objet un procédé de montage d'un haut-parleur sur un dispositif de support tel que précédemment mentionné, caractérisé en ce qu'il consiste :
- à disposer la pièce dans une empreinte ménagée dans un gabarit et de forme complémentaire à ladite pièce en plaçant au moins une ouverture sur un bossage ménagé dans l'empreinte, une ouverture restant libre,
- à monter le haut-parleur sur la pièce en disposant l'organe de connexion de ce haut-parleur dans l'ouverture libre, et
- à fixer le haut-parleur sur la pièce dans la position déterminée au moyen des organes de vissage.

Les caractéristiques et avantages de l'invention apparaîtront au cours de la description qui va suivre, donnée à titre d'exemple et faite en référence aux dessins annexés, sur lesquels :
- la Fig. 1 est une vue schématique en perspective éclatée d'un dispositif de support d'un haut-parleur, conforme à l'invention,
- la Fig. 2 est une vue schématique de la face arrière du dispositif de support, conforme à l'invention,
- les Figs. 3 à 5 sont des vues schématiques de la face arrière du dispositif de support et montrant les différentes positions angulaires de montage du haut-parleur sur ce dispositif de support,
- la Fig. 6 est une vue schématique en perspective d'un gabarit pour le montage d'un haut-parleur sur le dispositif de support selon les différentes positions angulaires, et
- les Figs. 7 à 9 sont des vues schématiques de face montrant les différentes positions du dispositif de support dans le gabarit.

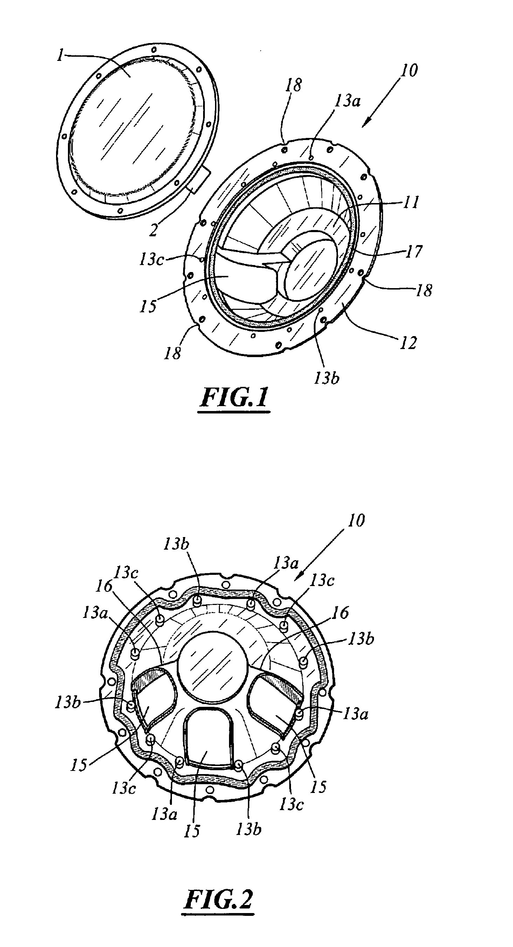

Sur la Fig. 1, on a représenté schématiquement un haut-parleur 1 et un dispositif de support 10 de ce haut-parleur 1 pour le montage dudit haut-parleur 1 sur un élément de carrosserie, non représenté, d'un véhicule automobile, comme par exemple un panneau de porte.

Le haut-parleur 1 comporte sur sa face arrière, c'est à dire sur sa face destinée à être placée sur le dispositif de support 10, un organe de connexion 2 faisant saillie par rapport à cette face arrière.

Le dispositif de support comprend une pièce 10 comportant une partie centrale 11 formant une cuvette et destinée à recevoir la partie arrière du haut-parleur 1 et une partie périphérique 12 formant un rebord d'appui du haut-parleur 1.

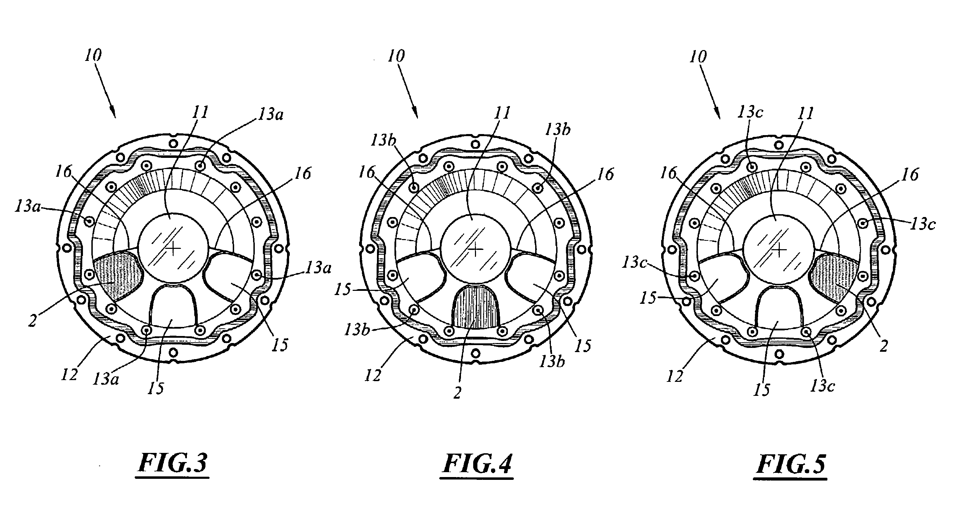

La pièce 10 comporte des moyens de montage du haut-parleur 1 dans différentes positions angulaires par rapport à ladite pièce 10 et, de préférence, dans trois positions angulaires, ainsi que montrée sur les Figs. 3 à 5.

Pour cela, les moyens de montage du haut-parleur 1 comprennent une série d'orifices 13a, 13b et 13c de passage d'organes de vissage, non représentés, pour chacune des positions angulaires. Cette série d'orifices uniformément répartis sur le rebord 12 de la pièce 10 se décompose en trois groupes d'orifices, un premier groupe d'orifices 13a (Fig. 3) correspondant à une première position angulaire du haut-parleur 1, un deuxième groupe d'orifices 13b (Fig. 4) correspondant à une deuxième position angulaire du haut-parleur 1 et un troisième groupe d'orifices 13c (Fig. 5) correspondant à une troisième position angulaire du haut-parleur 1 sur la pièce 10. Chaque orifice 13a, 13b et 13c comporte sur la face externe de la pièce 10, un fut de vissage, non représenté, pour l'organe de vissage correspondant.

Afin de permettre le passage des fils de raccordement avec le connecteur 2 du haut-parleur 1 et pour que l'air puisse circuler librement sans générer de contraintes sur la membrane du haut parleur 1 lors de son fonctionnement, la partie centrale 11 de la pièce 10 comporte une ouverture 15 correspondant à chaque position angulaire du haut-parleur 1 sur cette pièce 10.

Dans le cas présent, la partie centrale 11 de la pièce 10 est pourvue de trois ouvertures 15 correspondant aux trois positions angulaires.

Pour protéger au maximum le haut-parleur 1 des projections d'eau éventuelles, la face externe de la partie centrale 11 de la pièce 10 comporte des déflecteurs d'eau qui sont constitués par des nervures 16 disposées au-dessus des ouvertures 15, comme montré à la Fig. 2.

L'étanchéité entre le haut-parleur 1 et la pièce 10 est assurée par des moyens d'étanchéité formés par un joint périphérique 17 (Fig. 1) en matériau souple disposé sur le rebord d'appui 12, au bord de la partie centrale 11 de la pièce 10. Ce joint 17, par exemple de type silicone, est injecté sur le rebord périphérique 11 de la pièce 10 et, en plus d'assurer l'étanchéité il permet d'absorber les défauts de planéité lors du serrage du haut-parleur 1 sur la pièce 10. D'autres moyens d'étanchéité peuvent être utilisés.

Le rebord périphérique 12 de cette pièce 10 comporte également des orifices 18 permettant la fixation de l'ensemble constitué par le haut-parleur 1 et la pièce 10 sur l'élément de carrosserie, non représenté, correspondant.

Au moment du montage du haut-parleur 1 sur la pièce 10, l'opérateur doit positionner le connecteur 2 du haut-parleur 1 sur la pièce 10 dans l'ouverture 15 correspondant à l'orientation souhaitée de ce haut-parleur 1.

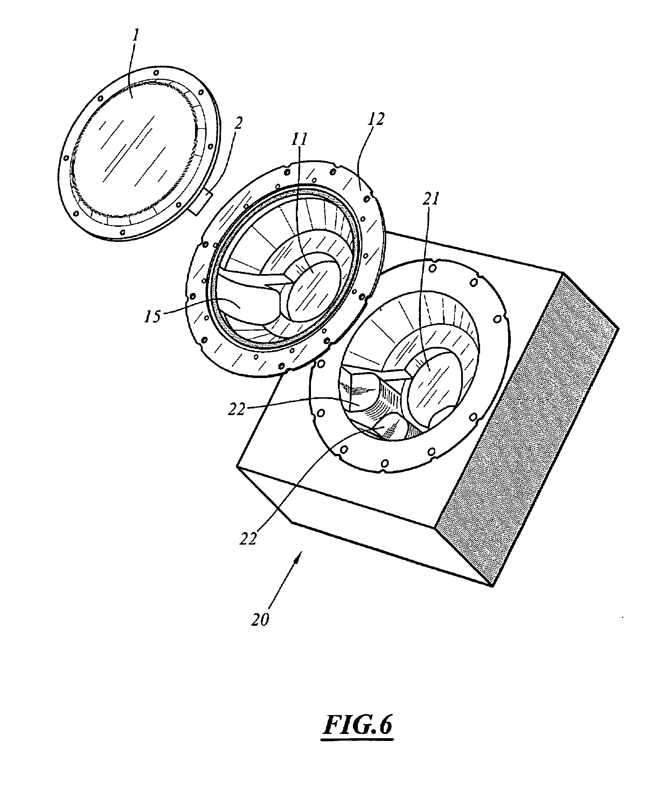

Pour cela, l'opérateur dispose, comme montré à la Fig. 6, d'un gabarit désigné par la référence générale 20.

Ce gabarit 20 comporte une empreinte 21 de forme complémentaire à la partie centrale 11 de la pièce 10. L'empreinte 21 est munie de bossages 22 dont le nombre correspond aux nombres d'ouvertures 15 moins une de façon à laisser une ouverture 15 libre. Dans le cas présent, l'empreinte 21 comporte deux bossages 22.

L'opérateur pose la pièce 10 dans l'empreinte 21 ménagée dans le gabarit 20 en plaçant les ouvertures 15 sur les bossages 22.

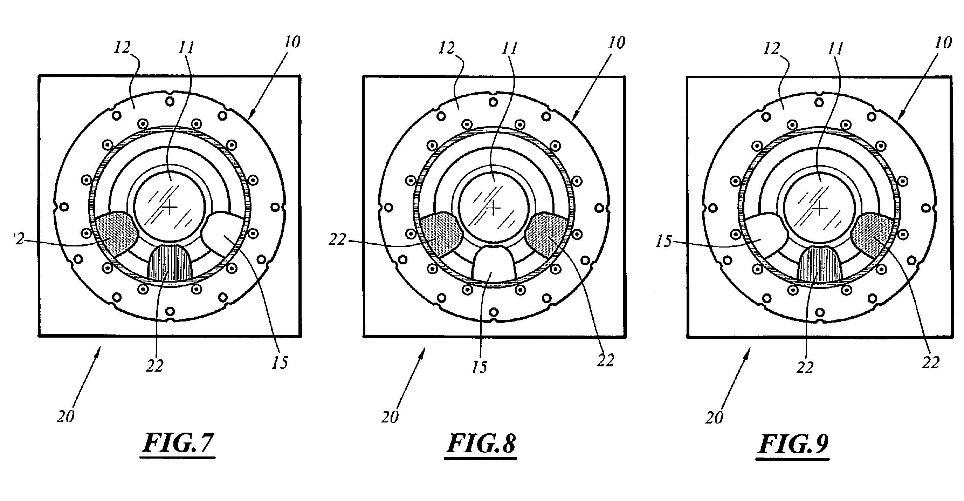

Comme montré sur les Figs. 7, 8 et 9 au moins une ouverture 15 n'est pas obturée par un bossage 22 et cette ouverture 15 reste libre. L'opérateur monte le haut-parleur 1 sur la pièce 10 en disposant le connecteur 2 dans l'ouverture 15 libre et ensuite, il fixe le haut-parleur 1 qui se trouve donc sur la pièce 10 dans la position désirée en fonction de l'environnement où cet ensemble doit être monté.

Avec cette manière de procéder et grâce au gabarit 20, l'opérateur est obligé de monter le haut-parleur 1 sur la pièce 10 dans la position souhaitée.

Le dispositif de support selon l'invention permet d'éviter que de l'eau pénètre dans le haut parleur et nuise à son bon fonctionnement et permet également de positionner le haut-parleur selon plusieurs positions angulaires.

En effet, lors du coulissement d'une vitre dans la porte, il peut se produire qu'elle recouvre partiellement le dispositif de support du haut parleur. Grâce à la présence de trois ouvertures, la position angulaire du haut-parleur peut être changée pour utiliser l'ouverture restée libre afin de permettre sa connexion sans modifier l'orientation de la pièce formant le support.

Selon la porte c'est à dire pour une porte gauche ou une porte droite, l'ouverture symétriquement opposée est utilisée ce qui permet un gain économique car une seule pièce de support est nécessaire pour les deux portes.

Le dispositif de support selon l'invention peut également être monté sur divers types de véhicule.

## Revendications

1. Dispositif de support d'un haut-parleur notamment sur un élément de carrosserie d'un véhicule automobile, du type comprenant une pièce (10) comportant une partie centrale (11) formant une cuvette et une partie périphérique (12) formant un rebord d'appui du haut-parleur (1), **caractérisé en ce que** la pièce (10) comporte :
- des moyens (13a, 13b, 13c) de montage du haut-parleur (1) dans différentes positions angulaires par rapport à la pièce (10),
- une ouverture (15) correspondant à chaque position angulaire pour le passage d'un organe de connexion (2), et
- des déflecteurs (16) d'eau disposés sur la face externe de la pièce (10) au-dessus de ladite ouverture (15).

2. Dispositif de support selon la revendication 1, **caractérisé en ce que** les positions angulaires du haut-parleur (1) par rapport à la pièce (10) sont au nombre de trois et la pièce (10) comporte trois ouvertures (15).

3. Dispositif de support selon la revendication 1 ou 2, **caractérisé en ce que** les moyens de montage comprennent, sur le rebord (12) d'appui de la pièce (10), des orifices (13a, 13b, 13c) de passage d'organes de vissage pour chacune des positions angulaires.

4. Dispositif de support selon l'une quelconque des revendications 1 à 3, **caractérisé en ce que** ladite ouverture (15) est ménagée sur la partie centrale (11) de la pièce (10).

5. Dispositif de support selon l'une quelconque des revendications précédentes, **caractérisé en ce que** les déflecteurs sont formés par des nervures (16).

6. Dispositif de support selon l'une quelconque des revendications précédentes, **caractérisé en ce que** la pièce (10) comporte des moyens (17) d'étanchéité avec le haut-parleur (1).

7. Dispositif de support selon la revendication 6, **caractérisé en ce que** les moyens d'étanchéité sont formés par un joint (17) périphérique en matériau souple disposé sur le rebord d'appui (12), au bord de la partie centrale (11) de la pièce (10).

8. Procédé de montage d'un haut-parleur (1) sur un dispositif de support (10) selon l'une quelconque des revendications précédentes, **caractérisé en ce qu'**il consiste :
- à disposer la pièce (10) dans une empreinte (21) ménagée dans un gabarit (1) et de forme complémentaire à ladite pièce (10) en plaçant au moins une ouverture (15) sur un bossage (22) ménagé dans l'empreinte (21), une ouverture (15) restant libre,
- à monter le haut-parleur (1) sur la pièce (10) en disposant l'organe de connexion (2) de ce haut-parleur (1) dans l'ouverture (15) libre, et
- à fixer le haut-parleur (1) sur la pièce (10) dans la position déterminée au moyen des organes de vissage.

## Claims

1. Device for holding a loudspeaker notably on a bodywork element of a motor vehicle, of the type comprising a part (10) comprising a central portion (11) forming a dish and a peripheral portion (12) forming a rim for resting the loudspeaker (1), **characterized in that** the parts (10) comprises:
- means (13a, 13b, 13c) for mounting the loudspeaker (1) in various angular positions relative to the part (10),
- an opening (15) corresponding to each angular position for the passage of a connection member (2), and
- water deflectors (16) placed on the outer face of the part (10) above the said opening (15).

2. Holding device according to Claim 1, **characterized in that** the angular positions of the loudspeaker (1) relative to the part (10) are three in number and the part (10) comprises three openings (15).

3. Holding device according to Claim 1 or 2, **characterized in that** the mounting means comprise, on the rim (12) for resting the part (10), orifices (13a, 13b, 13c) for the passage of screwing members for each of the annular positions.

4. Holding device according to any one of Claims 1 to 3, **characterized in that** the said opening (15) is arranged on the central portion (11) of the part (10).

5. Holding device according to any one of the preceding claims, **characterized in that** the deflectors are formed by ribs (16).

6. Holding device according to any one of the preceding claims, **characterized in that** the part (10) comprises means (17) for sealing with the loudspeaker (1).

7. Holding device according to Claim 6, **characterized in that** the sealing means are formed by a peripheral seal (17) made of flexible material placed on the resting rim (12), on the edge of the central portion (11) of the part (10).

8. Method for mounting a loudspeaker (1) on a holding device (10) according to any one of the preceding claims, **characterized in that** it consists:
- in placing the part (10) in a recess (21) arranged in a template (1) and with a shape that matches said part (10) by placing at least one opening (15) on a boss (22) arranged in the recess (21), one opening (15) remaining free,
- in mounting the loudspeaker (1) on the part (10) by placing the connection member (2) for this loudspeaker (1) in the free opening (15), and
- in attaching the loudspeaker (1) to the part (10) in the determined position by means of the screwing members.

## Patentansprüche

1. Vorrichtung für den Halt eines Lautsprechers, insbesondere auf einem Karosserieelement eines Kraftfahrzeugs, von der Art, die ein Bauteil (10) enthält, das einen zentralen Bereich (11), der eine Schale bildet, und einen peripheren Bereich (12) aufweist, der eine Auflagerandleiste des Lautsprechers (1) bildet, **dadurch gekennzeichnet, dass** das Bauteil (10) aufweist:
- Einrichtungen (13a, 13b, 13c) zur Montage des Lautsprechers (1) in verschiedenen Winkelstellungen bezüglich des Bauteils (10),
- eine Öffnung (15) entsprechend jeder Winkelstellung für den Durchgang eines Verbindungselements (2), und
- Wasserabweiser (16), die an der Außenseite des Bauteils (10) über der Öffnung (15) angeordnet sind.

2. Haltevorrichtung nach Anspruch 1, **dadurch gekennzeichnet, dass** es drei Winkelstellungen des Lautsprechers (1) bezüglich des Bauteils (10) gibt, und dass das Bauteil (10) drei Öffnungen (15) aufweist.

3. Haltevorrichtung nach Anspruch 1 oder 2, **dadurch gekennzeichnet, dass** die Montageeinrichtungen auf der Auflagerandleiste (12) des Bauteils (10) Öffnungen (13a, 13b, 13c) für den Durchgang von Schraubelementen für jede der Winkelstellungen enthalten.

4. Haltevorrichtung nach einem der Ansprüche 1 bis 3, **dadurch gekennzeichnet, dass** die Öffnung (15) im zentralen Bereich (11) des Bauteils (10) ausgebildet ist.

5. Haltevorrichtung nach einem der vorhergehenden Ansprüche, **dadurch gekennzeichnet, dass** die Abweiser von Rippen (16) gebildet werden.

6. Haltevorrichtung nach einem der vorhergehenden Ansprüche, **dadurch gekennzeichnet, dass** das Bauteil (10) Einrichtungen (17) zur Abdichtung mit dem Lautsprecher (1) aufweist.

7. Haltevorrichtung nach Anspruch 6, **dadurch gekennzeichnet, dass** die Abdichtungseinrichtungen von einer Umfangsdichtung (17) aus weichem Material gebildet werden, die auf dem Auflagerand (12) am Rand des zentralen Bereichs (11) des Bauteils (10) angeordnet ist.

8. Verfahren zur Montage eines Lautsprechers (1) auf eine Haltevorrichtung (10) nach einem der vorhergehenden Ansprüche, **dadurch gekennzeichnet, dass** es darin besteht:
- das Bauteil (10) in einer Einbuchtung (21) anzuordnen, die in einer Schablone (20) ausgebildet ist und eine zum Bauteil (10) komplementäre Form hat, indem mindestens eine Öffnung (15) auf einer Wölbung (22) angeordnet wird, die in der Einbuchtung (21) ausgebildet ist, wobei eine Öffnung (15) frei bleibt,
- den Lautsprecher (1) auf das Bauteil (10) zu montieren, indem das Verbindungselement (2) dieses Lautsprechers (1) in der freien Öffnung (15) angeordnet wird, und
- den Lautsprecher (1) am Bauteil (10) in der bestimmten Stellung mittels der Schraubelemente zu befestigen.
